# EUROPÄISCHE PATENTSCHRIFT

(11) **EP 3 960 571 B1**
(45) Veröffentlichungstag und Bekanntmachung des Hinweises auf die Patenterteilung: **18.12.2024**
(21) Anmeldenummer: 21181154.2
(22) Anmeldetag: 23.06.2021
(51) Int. Cl.: A01D 75/18, A01D 41/127, B60K 35/00, B60K 35/22, B60K 35/28, B60K 35/29

(54) **LANDWIRTSCHAFTLICHE ARBEITSMASCHINE**
AGRICULTURAL MACHINE
MACHINE AGRICOLE

(30) Priorität: 25.08.2020 DE 102020122201
(43) Veröffentlichungstag der Anmeldung: 02.03.2022
(73) Patentinhaber: CLAAS Tractor S.A.S., 78141 Vélizy-Villacoublay Cedex (FR)
(72) Erfinder: Correia, Michael, 78350 Jouy en Josas (FR)
(74) Vertreter: CLAAS Gruppe

(56) Entgegenhaltungen:
- EP-A1- 1 813 143
- DE-A1- 102007 022 899
- DE-A1- 102008 057 461
- US-A- 6 031 530
- US-A1- 2017 185 861

## Beschreibung

Die vorliegende Erfindung betrifft eine landwirtschaftliche Arbeitsmaschine gemäß dem Oberbegriff von Anspruch 1.

Der bekannte Stand der Technik (DE 10 2008 057 461 A1), von dem die Erfindung ausgeht, betrifft eine landwirtschaftliche Arbeitsmaschine gemäß dem Oberbegriff von Anspruch 1.

Bei der in Rede stehenden landwirtschaftlichen Arbeitsmaschine kann es sich um jedwede landwirtschaftliche Arbeitsmaschine handeln, die insbesondere der Abarbeitung eines landwirtschaftlichen Arbeitsauftrags, beispielsweise einem Bodenbearbeitungs- oder Ernteprozess, dient. Dazu gehören beispielsweise Zugmaschinen, insbesondere Traktoren, aber auch selbstfahrende Erntemaschinen wie Mähdrescher, Feldhäcksler oder dergleichen.

Diese weisen ein oder mehrere Arbeitsaggregate zur Durchführung oder Unterstützung landwirtschaftlicher Arbeit auf. Bei einer Erntemaschine zählen dazu beispielsweise die Einzugseinrichtung, das Dresch- oder Häckselwerk, die Überladeeinrichtung, aber auch der Fahrantrieb und die Lenkeinrichtung. Eine landwirtschaftliche Arbeitsmaschine kann auch mit Arbeitsorganen in Form von Anbaugeräten, die an das Trägerfahrzeug angebaut sind, ausgestattet sein. Bei einer Erntemaschine zählen dazu beispielsweise Vorsatzgeräte wie Schneid- oder Mähwerke, Maisgebisse oder dergleichen. Bei einer Zugmaschine kann als Anbaugerät beispielsweise ein Mähwerk, ein Wender, ein Schwader, eine Ballenpresse oder ein Bodenbearbeitungsgerät wie ein Pflug, ein Grubber, eine Egge oder dergleichen vorgesehen sein.

Die bekannte landwirtschaftliche Arbeitsmaschine weist ein Fahrerassistenzsystem mit einer Rechenvorrichtung und einer Anzeigeeinheit auf. Die Anzeigeeinheit weist eine Displaysteuereinheit und ein Benutzerdisplay auf. Von der Rechenvorrichtung werden Anzeigedaten an die Displaysteuereinheit übermittelt. Diese Anzeigedaten umfassen sicherheitskritische Benutzerinformationen zur Anzeige in einer vorbestimmten Region des Benutzerdisplays. Derartige sicherheitskritische Benutzerinformationen sind beispielsweise eine Fahrgeschwindigkeit, Alarme und technische Informationen der landwirtschaftlichen Arbeitsmaschine.

In einer Anzeigeroutine ermittelt die Displaysteuereinheit aus den Anzeigedaten Bilddaten, die dann auf dem Benutzerdisplay angezeigt werden.

Es ist dabei ganz allgemein so, dass zeitweise ein Teil der Bilddaten in einer vorbestimmten Region sicherheitskritische Benutzerinformationen umfasst, bei denen sichergestellt werden muss, dass diese dem Benutzer auch tatsächlich angezeigt werden. Es kann beispielsweise vorkommen, dass eine Information dem Benutzer zwar angezeigt werden soll, jedoch ein anderes Fenster oder eine andere Information überlagert dargestellt wird, so dass die sicherheitskritische Benutzerinformation für den Benutzer nicht sichtbar ist. Weiterhin kann es auch vorkommen, dass durch Softwarefehler oder ähnliches Informationen verloren gehen.

Es ist dabei eine Herausforderung, sicherzustellen, dass die sicherheitskritischen Benutzerinformationen tatsächlich auf dem Benutzerdisplay angezeigt werden.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass die Displaysteuereinheit in der Anzeigeroutine aus einem Teil der Bilddaten einen ersten Kontrollwert ermittelt, der abbildet, was tatsächlich auf dem Benutzerdisplay angezeigt wird oder werden soll. Dieser erste Kontrollwert kann dann von der Rechenvorrichtung kontrolliert werden, um sicherzustellen, dass die Displaysteuereinheit korrekt und wie gewünscht arbeitet.

Im Einzelnen wird vorgeschlagen, dass die Displaysteuereinheit in der Anzeigeroutine aus dem Teil der Bilddaten einen ersten Kontrollwert ermittelt, dass die Displaysteuereinheit den ersten Kontrollwert an die Rechenvorrichtung übermittelt, dass die Rechenvorrichtung in einer Kontrollroutine auf Basis der sicherheitskritischen Benutzerinformationen einen zweiten Kontrollwert ermittelt, dass die Rechenvorrichtung in der Kontrollroutine den ersten Kontrollwert und den zweiten Kontrollwert vergleicht und so ermittelt, ob die sicherheitskritischen Informationen in den Bilddaten abgebildet werden und dass die Rechenvorrichtung eine Notfallroutine durchführt, wenn die sicherheitskritischen Informationen nicht in den Bilddaten abgebildet werden.

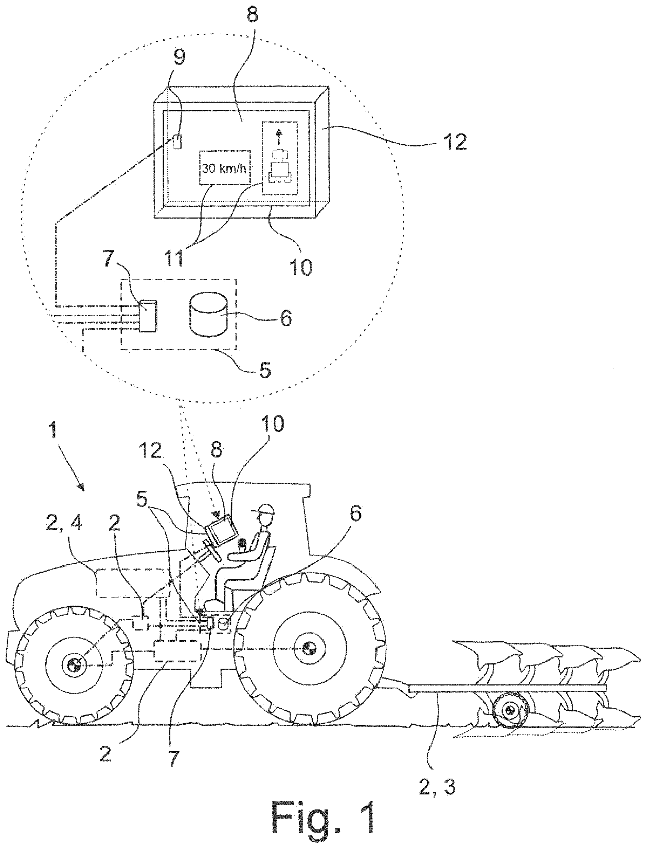

Im Folgenden wird die Erfindung anhand einer lediglich Ausführungsbeispiele darstellenden Zeichnung näher erläutert. In der Zeichnung zeigt
- Fig. 1: eine schematische Seitenansicht einer erfindungsgemäßen landwirtschaftlichen Arbeitsmaschine.

Fig. 1 zeigt eine landwirtschaftliche Arbeitsmaschine 1. Hier und vorzugsweise handelt es sich bei der Arbeitsmaschine 1 um einen Traktor, welcher beispielsweise als Zugmaschine eingesetzt wird. Die vorschlagsgemäße Lösung ist auch auf alle anderen, im einleitenden Teil genannten landwirtschaftlichen Arbeitsmaschinen, insbesondere auf selbstfahrende Erntemaschinen, anwendbar. Alle folgenden Ausführungen betreffen fast durchweg eine als Traktor ausgestaltete landwirtschaftliche Arbeitsmaschine 1. Diese Ausführungen gelten für alle anderen Arten von landwirtschaftlichen Arbeitsmaschinen entsprechend.

Die landwirtschaftliche Arbeitsmaschine 1 weist mindestens ein Arbeitsaggregat 2 zur Durchführung oder Unterstützung landwirtschaftlicher Arbeit auf. Bei dem jeweiligen Arbeitsaggregat 2 kann es sich um ein Anbaugerät 3, also ein an die landwirtschaftliche Arbeitsmaschine 1 im Übrigen, also das Trägerfahrzeug, anbaubares Arbeitsaggregat 2, oder um ein Arbeitsaggregat 2, das fester Bestandteil der landwirtschaftlichen Arbeitsmaschine 1 ist, handeln. Die landwirtschaftliche Arbeitsmaschine 1 weist dabei einen Motor 4 auf, der hier ebenfalls den Arbeitsaggregaten 2 zugerechnet wird.

Ferner weist die landwirtschaftliche Arbeitsmaschine 1 ein Fahrerassistenzsystem 5 auf, das einen Speicher 6 zum Hinterlegen von Daten und eine Rechenvorrichtung 7 zur Verarbeitung der in dem Speicher 6 hinterlegten Daten aufweist.

Das Fahrerassistenzsystem 5 weist weiterhin eine Anzeigeeinheit 8 mit einer Displaysteuereinheit 9 und einem Benutzerdisplay 10 auf, wobei die Rechenvorrichtung 7 Anzeigedaten umfassend sicherheitskritische Benutzerinformationen zur Anzeige in einer vorbestimmten Region 11 des Benutzerdisplays 10 an die Displaysteuereinheit 9 übermittelt. Die Displaysteuereinheit 9 ermittelt in einer Anzeigeroutine aus den Anzeigedaten Bilddaten, wobei die Anzeigeeinheit 8 die Bilddaten auf dem Benutzerdisplay 10 anzeigt und wobei die Anzeigeeinheit 8 einen Teil der Bilddaten in der vorbestimmten Region 11 anzeigt.

Das Fahrerassistenzsystem 5 ist ganz allgemein die Schnittstelle zwischen der landwirtschaftlichen Arbeitsmaschine 1 und einem Benutzer. Das Fahrerassistenzsystem 5 kann dabei diverse Automatisierungsfunktionen übernehmen und weitgehende Hilfestellungen für den Benutzer leisten.

Hier und vorzugsweise übernimmt die Displaysteuereinheit 9 die tatsächliche physikalische Ansteuerung des Benutzerdisplays 10. Zumindest aber ermittelt sie die Bilddaten. Der Begriff "Bilddaten" betrifft hier Daten, aus denen sich eindeutig entnehmen lässt, welche Bilder auf dem Benutzerdisplay 10 angezeigt werden sollen. Die Anzeigedaten hingegen betreffen ganz allgemein Daten, die von der Rechenvorrichtung 7 zur Anzeige an die Displaysteuereinheit 9 übermittelt werden. Es kann beispielsweise vorkommen, dass in den Anzeigedaten mehrere Fenster enthalten sind, die angezeigt werden sollen, die also insofern verschiedene Ebenen bilden. In den Bilddaten ist dann bereits aufgelöst, welches Fenster das oberste Fenster ist und welche Information somit zu oberst angezeigt wird. Die dahinter angeordneten Fenster bzw. deren Informationen oder Teile davon würden dann entsprechend nicht angezeigt, obwohl sie in den Anzeigedaten enthalten sind.

Hier und vorzugsweise ist es sogar so, dass die Rechenvorrichtung 7 mehrere logische Subeinheiten, insbesondere Threads oder Prozesse, aufweist, die Anzeigedaten an die Displaysteuereinheit 9 übermitteln und das die Displaysteuereinheit 9 in der Anzeigeroutine die Anzeigedaten miteinander verknüpft, insbesondere einander überlagert.

Vorliegend soll nun sichergestellt werden, dass zumindest die sicherheitskritischen Benutzerinformationen in der vorbestimmten Region 11 auch tatsächlich angezeigt werden. Neben dem bereits erwähnten Überlagern der Anzeige beispielsweise durch andere Fenster können so auch Softwarefehler der Displaysteuereinheit 9 bemerkt werden.

Hier und vorzugsweise umfasst die vorbestimmte Region 11 nur einen Teil des Benutzerdisplays 10.

Wesentlich ist nun, dass die Displaysteuereinheit 9 in der Anzeigeroutine aus dem Teil der Bilddaten einen ersten Kontrollwert ermittelt, dass die Displaysteuereinheit 9 den ersten Kontrollwert an die Rechenvorrichtung 7 übermittelt, dass die Rechenvorrichtung 7 in einer Kontrollroutine auf Basis der sicherheitskritischen Benutzerinformationen einen zweiten Kontrollwert ermittelt, dass die Rechenvorrichtung 7 in der Kontrollroutine den ersten Kontrollwert und den zweiten Kontrollwert vergleicht und so ermittelt, ob die sicherheitskritischen Informationen in den Bilddaten abgebildet werden und dass die Rechenvorrichtung 7 eine Notfallroutine durchführt, wenn die sicherheitskritischen Informationen nicht in den Bilddaten abgebildet werden.

Der erste und der zweite Kontrollwert sind ganz allgemein Werte, die abbilden, welche Bilder von dem Benutzerdisplay 10 angezeigt werden. Dabei muss nicht die vollständige Anzeige aus den Kontrollwerten ermittelbar sein. Beispielsweise können die Kontrollwerte Hashwerte von den Bilddaten sein. Die Kontrollwerte können identisch sein, jedoch auch anderweitig vergleichbar sein.

Essenziell ist nun, dass der erste Kontrollwert und der zweite Kontrollwert zumindest teilweise unabhängig voneinander ermittelt werden, so dass die Rechenvorrichtung 7 ermitteln kann, ob die sicherheitskritischen Benutzerinformationen tatsächlich auf dem Benutzerdisplay 10 angezeigt werden. Hier und vorzugsweise ermittelt die Displaysteuereinheit 9 in der Anzeigeroutine bereits Pixelfarbwerte und/oder Pixelopazitätswerte und/oder Pixelhelligkeitswerte für das Benutzerdisplay 10 und erst anschließend daraus den ersten Kontrollwert.

Weiter vorzugsweise steuert die Displaysteuereinheit 9 im Anschluss an die Ermittlung des ersten Kontrollwerts das Benutzerdisplay 10 auf Basis der Bilddaten zur tatsächlichen physikalischen Anzeige genau dieser Bilddaten an. Der erste Kontrollwert bildet dann also diejenigen Bilder ab, die die Displaysteuereinheit 9 anzeigen wird. Abgesehen von tatsächlichen Hardwarefehlern in der Ansteuerung des Benutzerdisplays 10, die dem Benutzer jedoch zumeist anderweitig auffallen würden, können dann die meisten Fehler erkannt werden.

Die Notfallroutine kann beispielsweise ein Reset der Displaysteuereinheit 9 sein. Sie kann auch ganz allgemein eine anderweitige Information an den Benutzer umfassen oder ein Notstopp der landwirtschaftlichen Arbeitsmaschine 1 sein.

Bei dem in den Figuren dargestellten und insoweit bevorzugten Ausführungsbeispiel ist ferner vorgesehen, dass die Rechenvorrichtung 7 softwaretechnisch und hardwaretechnisch separat von der Displaysteuereinheit 9 ausgebildet ist, vorzugsweise, dass die Anzeigeeinheit 8 ein Gehäuse 12 aufweist, dass das Benutzerdisplay 10 Teil des Gehäuses 12 ist, dass die Rechenvorrichtung 7 von dem Gehäuse 12 beabstandet angeordnet ist, und, dass die Displaysteuereinheit 9 in oder an dem Gehäuse 12 angeordnet ist.

Die Rechenvorrichtung 7 und die Displaysteuereinheit 9 sind hier und vorzugsweise softwaretechnisch verbunden, bilden jedoch softwaretechnisch keine logische Einheit. Auch hardwaretechnisch werden sie hier und vorzugsweise nicht durch eine gemeinsame Hardware gebildet. Hier und vorzugsweise sind die Rechenvorrichtung 7 und die Displaysteuereinheit 9 mittels einer CAN-Bus Verbindung verbunden.

Weiter ist hier und vorzugsweise vorgesehen, dass die Rechenvorrichtung 7 eine Hauptsteuerung der landwirtschaftlichen Arbeitsmaschine 1 ist, vorzugsweise, dass die Rechenvorrichtung 7 eine Motorsteuerung zur Einstellung und/oder Ermittlung von Betriebsparametern eines Motors 4 der landwirtschaftlichen Arbeitsmaschine 1 und/oder eine Fahrroutenregelung einer Fahrroute der landwirtschaftlichen Arbeitsmaschine 1 und/oder eine Arbeitsaggregatsteuerung zur Einstellung und/oder Ermittlung von Betriebsparametern eines Arbeitsaggregats 2 der landwirtschaftlichen Arbeitsmaschine 1 aufweist.

Die Betriebsparameter können Parameter wie eine Drehzahl, ein Drehmoment und andere physikalische Parameter des Motors 4 der landwirtschaftlichen Arbeitsmaschine 1 sein.

Darüber hinaus ist hier und vorzugsweise vorgesehen, dass der erste und zweite Kontrollwert Zustände von Pixeln der vorbestimmten Region 11 abbilden, vorzugsweise, dass der erste Kontrollwert ein zyklischer Redundanzwert ist und/oder aus Positionswerten und/oder Opazitäts- und/oder Helligkeits- und/oder Farbwerten, insbesondere RGB-Werten, von Pixeln der vorbestimmte Region 11 von der Displaysteuereinheit 9 ermittelt wird, weiter vorzugsweise, dass der zweite Kontrollwert in dem Speicher 6 hinterlegt ist. Methoden zur Berechnung von zyklischen Redundanzwerten sind hinlänglich bekannt.

Während der erste Kontrollwert wie oben erwähnt hier und vorzugsweise direkt anhand der anzuzeigenden Bilder ermittelt wird, kann der zweite Kontrollwert der Rechenvorrichtung 7 bereits bekannt sein. Beispielsweise kann eine Geschwindigkeitsänderung oder eine Fahrtrichtungsänderung der landwirtschaftlichen Arbeitsmaschine 1 immer mit dem gleichen Bild angezeigt werden, so dass die Rechenvorrichtung 7 bereits anhand der Anzeigedaten weiß, welches Bild auf dem Benutzerdisplay 10 in welcher Region angezeigt werden sollte. Sie muss dann nur anhand des ersten Kontrollwerts überprüfen, ob dieses Bild tatsächlich Teil der Bilddaten in der vorbestimmten Region 11 ist und entsprechend dort als Bild angezeigt wird.

Weiter ist hier und vorzugsweise vorgesehen, dass die Rechenvorrichtung 7 in der Notfallroutine einen Reset der Displaysteuereinheit 9, insbesondere eines frame buffers der Displaysteuereinheit 9, auslöst, und/oder, dass die Displaysteuereinheit 9 den ersten Kontrollwert mindestens alle 1000 ms, vorzugsweise alle 400 ms, weiter vorzugsweise alle 200ms, übermittelt, und/oder dass die Displaysteuereinheit 9 den ersten Kontrollwert höchstens alle 10 ms, vorzugsweise höchstens alle 50 ms, weiter vorzugsweise höchstens alle 100 ms, übermittelt, und/oder, dass die sicherheitskritischen Informationen eine Fahrrichtung und/oder eine Fahrgeschwindigkeit und/oder eine Temperatur-Information, insbesondere eine Motortemperatur, und/oder eine Alarm-Anzeige und/oder eine Ölstandsanzeige umfassen.

### Bezugszeichenliste

- 1: Landwirtschaftliche Arbeitsmaschine
- 2: Arbeitsaggregat
- 3: Anbaugerät
- 4: Motor
- 5: Fahrerassistenzsystem
- 6: Speicher
- 7: Rechenvorrichtung
- 8: Anzeigeeinheit
- 9: Displaysteuereinheit
- 10: Benutzerdisplay
- 11: Vorbestimmte Region
- 12: Gehäuse

## Patentansprüche

1. Landwirtschaftliche Arbeitsmaschine, insbesondere selbstfahrende Erntemaschine oder Zugmaschine,
wobei ein Fahrerassistenzsystem (5) vorgesehen ist, das einen Speicher (6) zum Hinterlegen von Daten, eine Rechenvorrichtung (7) zur Verarbeitung der in dem Speicher (6) hinterlegten Daten und eine Anzeigeeinheit (8) aufweist,
wobei die Anzeigeeinheit (8) eine Displaysteuereinheit (9) und ein Benutzerdisplay (10) aufweist,
wobei die Rechenvorrichtung (7) eingerichtet ist, Anzeigedaten umfassend sicherheitskritische Benutzerinformationen zur Anzeige in einer vorbestimmten Region (11) des Benutzerdisplays (10) an die Displaysteuereinheit (9) zu übermitteln,
wobei die Displaysteuereinheit (9) eingerichtet ist, in einer Anzeigeroutine aus den Anzeigedaten Bilddaten zu ermitteln,
wobei die Anzeigeeinheit (8) eingerichtet ist, die Bilddaten auf dem Benutzerdisplay (10) anzuzeigen und wobei die Anzeigeeinheit (8) eingerichtet ist, einen Teil der Bilddaten in der vorbestimmten Region (11) anzuzeigen,
**dadurch gekennzeichnet,**
**dass** die Displaysteuereinheit (9) eingerichtet ist, in der Anzeigeroutine aus dem Teil der Bilddaten einen ersten Kontrollwert zu ermitteln, dass die Displaysteuereinheit (9) eingerichtet ist, den ersten Kontrollwert an die Rechenvorrichtung (7) zu übermitteln, dass die Rechenvorrichtung (7) eingerichtet ist, in einer Kontrollroutine auf Basis der sicherheitskritischen Benutzerinformationen einen zweiten Kontrollwert zu ermitteln, dass die Rechenvorrichtung (7) eingerichtet ist, in der Kontrollroutine den ersten Kontrollwert und den zweiten Kontrollwert zu vergleichen und so zu ermitteln, ob die sicherheitskritischen Informationen in den Bilddaten abgebildet sind und dass die Rechenvorrichtung (7) eingerichtet ist, eine Notfallroutine durchzuführen, wenn die sicherheitskritischen Informationen nicht in den Bilddaten abgebildet sind.

2. Landwirtschaftliche Arbeitsmaschine nach Anspruch 1, **dadurch gekennzeichnet, dass** die Rechenvorrichtung (7) softwaretechnisch und hardwaretechnisch separat von der Displaysteuereinheit (9) ausgebildet ist, vorzugsweise, dass die Anzeigeeinheit (8) ein Gehäuse (12) aufweist, dass das Benutzerdisplay (10) Teil des Gehäuses (12) ist, dass die Rechenvorrichtung (7) von dem Gehäuse (12) beabstandet angeordnet ist und, dass die Displaysteuereinheit (9) in oder an dem Gehäuse (12) angeordnet ist.

3. Landwirtschaftliche Arbeitsmaschine nach Anspruch 1 oder 2, **dadurch gekennzeichnet, dass** die Rechenvorrichtung (7) eine Hauptsteuerung der landwirtschaftlichen Arbeitsmaschine (1) ist, vorzugsweise, dass die Rechenvorrichtung (7) eine Motorsteuerung zur Einstellung und/oder Ermittlung von Betriebsparametern eines Motors (4) der landwirtschaftlichen Arbeitsmaschine (1) und/oder eine Fahrroutenregelung einer Fahrroute der landwirtschaftlichen Arbeitsmaschine (1) und/oder eine Arbeitsaggregatsteuerung zur Einstellung und/oder Ermittlung von Betriebsparametern eines Arbeitsaggregats (2) der landwirtschaftlichen Arbeitsmaschine (1) aufweist.

4. Landwirtschaftliche Arbeitsmaschine nach einem der vorhergehenden Ansprüche, **dadurch gekennzeichnet, dass** der erste und zweite Kontrollwert Zustände von Pixeln der vorbestimmten Region (11) abbilden, vorzugsweise, dass der erste Kontrollwert ein zyklischer Redundanzwert ist und/oder aus Positionswerten und/oder Opazitäts- und/oder Helligkeits- und/oder Farbwerten, insbesondere RGB-Werten, von Pixeln der vorbestimmte Region (11) von der Displaysteuereinheit (9) ermittelt wird, weiter vorzugsweise, dass der zweite Kontrollwert in dem Speicher (6) hinterlegt ist.

5. Landwirtschaftliche Arbeitsmaschine nach einem der vorhergehenden Ansprüche, **dadurch gekennzeichnet, dass** die Rechenvorrichtung (7) eingerichtet ist, in der Notfallroutine einen Reset der Displaysteuereinheit (9), insbesondere eines frame buffers der Displaysteuereinheit (9), auszulösen, und/oder, dass die Displaysteuereinheit (9) eingerichtet ist, den ersten Kontrollwert mindestens alle 1000 ms, vorzugsweise alle 400 ms, weiter vorzugsweise alle 200ms, zu übermitteln, und/oder dass die Displaysteuereinheit (9) eingerichtet ist, den ersten Kontrollwert höchstens alle 10 ms, vorzugsweise höchstens alle 50 ms, weiter vorzugsweise höchstens alle 100 ms, zu übermitteln, und/oder, dass die sicherheitskritischen Informationen eine Fahrrichtung und/oder eine Fahrgeschwindigkeit und/oder eine Temperatur-Information, insbesondere eine Motortemperatur, und/oder eine Alarm-Anzeige und/oder eine Ölstandsanzeige umfassen.

## Claims

1. An agricultural working machine, in particular a self-propelled harvesting machine or towing vehicle,
wherein a driver assistance system (5) is provided, which has a memory (6) for storing data, a computer device (7) for processing the data stored in the memory (6) and a notification unit (8), wherein the notification unit (8) has a display control unit (9) and a user display (10),
wherein the computer device (7) is configured to communicate notification data comprising user information which is critical to safety for display in a prespecified region (11) of the user display (10) to the display control unit (9),
wherein the display control unit (9) is configured to determine, in a notification routine, image data from the notification data,
wherein the notification unit (8) is configured to display the image data on the user display (10) and wherein the notification unit (8) is configured to display a portion of the image data in the prespecified region (11),
**characterized in that**
the display control unit (9) is configured to determine, in the notification routine, a first check value from the portion of the image data, **in that** the display control unit (9) is configured to communicate the first check value to the computer device (7), **in that** the computer device (7) is configured to determine, in a check routine, a second check value on the basis of the user information which is critical to safety, **in that** the computer device (7) is configured to compare, in the check routine, the first check value and the second check value and thus to determine whether the information which is critical to safety is represented in the image data and **in that** the computer device (7) is configured to execute an emergency routine if the information which is critical to safety is not represented in the image data.

2. The agricultural working machine according to claim 1, **characterized in that** the computer device (7) is configured separately from the display control unit (9) in respect of software and hardware technology, preferably **in that** the notification unit (8) has a housing (12), **in that** the user display (10) is part of the housing (12), **in that** the computer device (7) is disposed at a distance from the housing (12), and **in that** the display control unit (9) is disposed in or on the housing (12).

3. The agricultural working machine according to claim 1 or claim 2, **characterized in that** the computer device (7) is a main controller of the agricultural working machine (1), preferably **in that** the computer device (7) has an engine controller for setting and/or determining operating parameters of an engine (4) of the agricultural working machine (1) and/or a travel route regulator of a travel route of the agricultural working machine (1) and/or a working assembly controller for setting and/or determining operating parameters of a working assembly (2) of the agricultural working machine (1).

4. The agricultural working machine according to one of the preceding claims, **characterized in that** the first check value and second check value represent states of pixels of the prespecified region (11), preferably **in that** the first check value is a cyclic redundancy value and/or is determined by the first display control unit (9) from position values and/or opacity values and/or brightness values and/or colour values, in particular RGB values, of pixels of the prespecified region (11), more preferably **in that** the second check value is stored in the memory (6).

5. The agricultural working machine according to one of the preceding claims, **characterized in that** the computer device (7) is configured to initiate, in the emergency routine, a reset of the display control unit (9), in particular of a frame buffer of the display control unit (9), and/or **in that** the display control unit (9) is configured to communicate the first check value at least every 1000 ms, preferably every 400 ms, more preferably every 200 ms, and/or **in that** the display control unit (9) is configured to communicate the first check value at most every 10 ms, preferably at most every 50 ms, more preferably at most every 100 ms, and/or **in that** the information which is critical to safety comprises a direction of travel and/or a speed of travel and/or temperature information, in particular an engine temperature, and/or an alarm indication and/or an oil level indication.

## Revendications

1. Machine agricole, en particulier machine de récolte automotrice ou engin de traction,
dans laquelle il est prévu un système d'assistance au conducteur (5) qui présente une mémoire (6) pour l'enregistrement de données, un dispositif de calcul (7) pour le traitement des données enregistrées dans la mémoire (6), et une unité d'affichage (8),
l'unité d'affichage (8) présentant une unité de commande de visualisation (9) et un écran utilisateur (10),
le dispositif de calcul (7) étant conçu pour transmettre à l'unité de commande de visualisation (9), des données d'affichage comprenant des informations utilisateur critiques pour la sécurité, en vue de leur affichage dans une zone prédéfinie (11) de l'écran utilisateur (10),
l'unité de commande de visualisation (9) étant conçue pour déterminer des données images à partir des données d'affichage, dans une routine d'affichage,
l'unité d'affichage (8) étant conçue pour afficher les données images sur l'écran utilisateur (10), et l'unité d'affichage (8) étant conçue pour afficher une partie des données images dans la zone prédéfinie (11),
**caractérisée en ce que**
l'unité de commande de visualisation (9) est conçue pour déterminer, dans la routine d'affichage, une première valeur de contrôle à partir de la partie des données images, **en ce que** l'unité de commande de visualisation (9) est conçue pour transmettre la première valeur de contrôle au dispositif de calcul (7), **en ce que** le dispositif de calcul (7) est conçu pour déterminer, dans une routine de contrôle, une deuxième valeur de contrôle sur la base des informations utilisateur critiques en termes de sécurité, **en ce que** le dispositif de calcul (7) est conçu pour comparer, dans la routine de contrôle, la première valeur de contrôle et la deuxième valeur de contrôle, et pour déterminer ainsi si les informations critiques en termes de sécurité sont reproduites dans les données images, et **en ce que** le dispositif de calcul (7) est conçu pour exécuter une routine d'urgence lorsque les informations critiques en termes de sécurité ne sont pas reproduites dans les données images.

2. Machine agricole selon la revendication 1, **caractérisée en ce que** le dispositif de calcul (7) est réalisé séparément de l'unité de commande de visualisation (9) sur le plan logiciel et sur le plan matériel, de préférence **en ce que** l'unité d'affichage (8) présente un boîtier (12), **en ce que** l'écran utilisateur (10) fait partie du boîtier (12), **en ce que** le dispositif de calcul (7) est installé à distance du boîtier (12), et **en ce que** l'unité de commande de visualisation (9) est disposée dans ou sur le boîtier (12).

3. Machine agricole selon la revendication 1 ou 2, **caractérisée en ce que** le dispositif de calcul (7) est une commande principale de la machine agricole (1), de préférence **en ce que** le dispositif de calcul (7) présente une commande de moteur pour le réglage et/ou la détermination de paramètres de fonctionnement d'un moteur (4) de la machine agricole (1), et/ou une régulation d'itinéraire d'un itinéraire de la machine agricole (1), et/ou une commande d'organe de travail pour le réglage et/ou la détermination de paramètres de fonctionnement d'un organe de travail (2) de la machine agricole (1).

4. Machine agricole selon une des revendications précédentes, **caractérisée en ce que** les première et deuxième valeurs de contrôle reproduisent des états de pixels de la zone prédéfinie (11), de préférence **en ce que** la première valeur de contrôle est une valeur de redondance cyclique et/ou est déterminée par l'unité de commande de visualisation (9) à partir de valeurs de position et/ou d'opacité et/ou de luminosité, et/ou de couleur, notamment de valeurs RVB, de pixels de la zone prédéfinie (11), et en outre de préférence **en ce que** la deuxième valeur de contrôle est enregistrée dans la mémoire (6).

5. Machine agricole selon une des revendications précédentes, **caractérisée en ce que** le dispositif de calcul (7) est conçu pour déclencher, dans la routine d'urgence, une réinitialisation de l'unité de commande de visualisation (9), en particulier d'une mémoire d'image de l'unité de commande de visualisation (9), et/ou **en ce que** l'unité de commande de visualisation (9) est conçue pour transmettre la première valeur de contrôle au moins toutes les 1 000 ms, de préférence toutes les 400 ms, et de manière particulièrement avantageuse toutes les 200 ms, et/ou **en ce que** l'unité de commande de visualisation (9) est conçue pour transmettre la première valeur de contrôle au maximum toutes les 10 ms, de préférence au maximum toutes les 50 ms, et de manière particulièrement avantageuse au maximum toutes les 100 ms, et/ou **en ce que** les informations critiques en termes de sécurité comprennent une direction de déplacement et/ou une vitesse de déplacement et/ou une information relative à la température, notamment une température de moteur, et/ou une indication d'alarme et/ou une indication de niveau d'huile.
